# EUROPÄISCHE PATENTANMELDUNG

(11) **EP 4 191 046 A1**
(43) Veröffentlichungstag der Anmeldung: **07.06.2023**
(21) Anmeldenummer: 21212548.8
(22) Anmeldetag: 06.12.2021
(51) Int. Cl.: F02D 35/02, F02D 15/02, F02B 75/04

(54) **GROSSDIESELMOTOR UND VERFAHREN ZUM BESTIMMEN DES ZYLINDERDRUCKS IN EINEM GROSSDIESELMOTOR**

(71) Anmelder: Winterthur Gas & Diesel AG, 8401 Winterthur (CH)
(72) Erfinder: Alder, Roland, 8405 Winterthur (CH); Huber, Cyril, 8547 Gachnang (CH); Stürm, Thomas, 8505 Dettighofen (CH)
(74) Vertreter: IPS Irsch AG

(57) **Zusammenfassung**

Es wird ein Grossdieselmotor vorgeschlagen mit mindestens einem Zylinder (2), welcher einen Brennraum (4) aufweist, der durch einen Kolben (3) begrenzt wird, welcher entlang einer Zylinderachse (A) hin- und herbewegbar angeordnet ist, sowie mit einer rotierbaren Kurbelwelle (9), wobei der Kolben (3) über eine Kolbenstange (6) mit einem Kreuzkopf (7) verbunden ist, der einen Kreuzkopfzapfen (71) aufweist, wobei der Kreuzkopf (7) über eine Schubstange (8) mit der Kurbelwelle (9) verbunden ist, und wobei im Kreuzkopfzapfen (71) eine hydraulische Kammer (10) vorgesehen ist, welche durch die Kolbenstange (6) begrenzt wird, und mittels welcher die Kolbenstange (6) zum Einstellen eines Kompressionsverhältnisses relativ zum Kreuzkopfzapfen (71) in Richtung der Zylinderachse (A) verschiebbar ist. Es ist ein Drucksensor (11) vorgesehen, mit welchem ein hydraulischer Druck bestimmbar ist, der in der hydraulischen Kammer (10) herrscht, sowie eine Auswerteeinheit (12), mit welcher ein im Brennraum (4) herrschender Zylinderdruck mittels des hydraulischen Drucks bestimmbar ist. Ferner wird ein Verfahren zum Bestimmen des Zylinderdrucks in einem Grossdieselmotor vorgeschlagen.

## Beschreibung

Die Erfindung betrifft einen Grossdieselmotor und ein Verfahren zum Bestimmen des Zylinderdrucks in einem Grossdieselmotor gemäss dem Oberbegriff des unabhängigen Patentanspruchs der jeweiligen Kategorie.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betrieb, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien. Grossdieselmotoren haben typischerweise Zylinder, deren Innendurchmesser (Bohrung) mindestens 200 mm beträgt. Heutzutage werden Grossdieselmotoren mit einer Bohrung von bis zu 960 mm oder sogar noch mehr eingesetzt. Grossdieselmotoren werden klassischerweise mit Schweröl betrieben.

Unter den Aspekten des wirtschaftlichen und effizienten Betriebs, der Einhaltung von Abgasgrenzwerten und der Verfügbarkeit von Ressourcen sucht man heute auch bei Grossdieselmotoren nach Alternativen zu dem Brennstoff Schweröl. Dabei werden sowohl flüssige Brennstoffe eingesetzt, also Brennstoffe, die im flüssigen Zustand in den Brennraum eingebracht werden, als auch gasförmige Brennstoffe, also Brennstoffe, die im gasförmigen Zustand in den Brennraum eingebracht werden.

Beispiele für flüssige Brennstoffe als bekannte Alternativen zum Schweröl sind andere schwere Kohlenwasserstoffe, die insbesondere als Rückstände bei der Raffinerie von Erdöl übrig bleiben, Alkohole, insbesondere Methanol oder Ethanol, Benzin, Diesel, oder auch Emulsionen oder Suspensionen. So ist es z. B. bekannt, die als MSAR (Multiphase Superfine Atomised Residue) bezeichneten Emulsionen als Brennstoff zu verwenden. Eine bekannte Suspension ist diejenige aus Kohlenstaub und Wasser, die ebenfalls als Brennstoff für Grossmotoren eingesetzt wird. Als gasförmige Brennstoffe sind beispielsweise Erdgase wie LNG (liquefied natural gas), Flüssiggase wie LPG (liquefied petroleum gas) oder Ethan bekannt.

Es sind insbesondere auch solche Grossdieselmotoren bekannt, die mit mindestens zwei verschiedenen Brennstoffen betreibbar sind, wobei der Motor je nach Betriebssituation oder Umgebung entweder mit dem einen Brennstoff oder mit dem anderen Brennstoff betrieben wird.

Ein Beispiel für einen Grossdieselmotor, der mit zwei unterschiedlichen Brennstoffen betreibbar ist, ist ein Grossdieselmotor, der als Dual-Fuel Grossdieselmotor ausgestaltet ist. Dieser ist in einem Flüssigmodus betreibbar, in welchem ein flüssiger Brennstoff zur Verbrennung in den Zylinder eingebracht wird, sowie in einem Gasmodus, in welchem ein Gas als Brennstoff in den Zylinder eingebracht wird.

Grossdieselmotoren, die mit mindestens zwei oder auch mehr verschiedenen flüssigen oder gasförmigen Brennstoffen betrieben werden können, werden häufig, je nach aktuell verwendetem Brennstoff in unterschiedlichen Betriebsmodi betrieben. In dem häufig als Dieselbetrieb bezeichneten Betriebsmodus erfolgt die Verbrennung des Brennstoffs in der Regel nach dem Prinzip der Kompressionszündung oder Selbstzündung des Brennstoffs. In dem häufig als Ottobetrieb bezeichneten Modus erfolgt die Verbrennung durch die Fremdzündung eines zündfähigen vorgemischten Luft-Brennstoff-Gemisches. Diese Fremdzündung kann beispielsweise durch einen elektrischen Funken erfolgen, z. B. mit einer Zündkerze, oder auch durch die Selbstzündung einer kleinen eingespritzten Brennstoffmenge, welche dann die Fremdzündung eines anderen Brennstoffs bewirkt. Häufig wird dabei die für die Selbstzündung vorgesehene kleine Brennstoffmenge in eine mit dem Brennraum verbundene Vorkammer eingespritzt.

Ferner sind auch Mischformen aus dem Ottobetrieb und dem Dieselbetrieb bekannt.

Im Rahmen dieser Anmeldung sind mit dem Begriff "Grossdieselmotor" solche Motoren gemeint, die zumindest in einem Dieselbetrieb betrieben werden können. Insbesondere umfasst der Begriff "Grossdieselmotor" also auch solche Dual-Fuel Grossmotoren, die ausser im Dieselbetrieb auch noch in einem anderen Betrieb, beispielsweise dem Otto-Betrieb, betreibbar sind.

Im Rahmen dieser Anmeldung ist mit dem Begriff "Gasmodus" bzw. "Betrieb im Gasmodus" gemeint, dass nur das Gas bzw. der gasförmige Brennstoff für die drehmomenterzeugende Verbrennung als Brennstoff genutzt wird. Zwar ist es, wie bereits erwähnt, möglich und durchaus auch üblich, dass im Gasmodus für die Fremdzündung des vorgemischten Luft-Brennstoff-Gemisches eine geringe Menge eines selbstzündenden flüssigen Brennstoffs, z. B. Schweröl, eingespritzt wird, um die Fremdzündung auszuführen, aber dennoch wird der Verbrennungsprozess, welcher das Drehmoment erzeugt, vollständig mit dem Gas bzw. mit dem gasförmigen Brennstoff betrieben.

Dieser Vorgang der Fremdzündung durch Selbstzündung einer geringen Menge eines flüssigen Brennstoffs wird manchmal auch als Piloteinspritzung bezeichnet. Diese Piloteinspritzung hat nichts zu tun mit der Einspritzung des flüssigen Brennstoffs in den Brennraum, wenn der Grossmotor im Flüssigmodus betrieben wird. Für die Piloteinspritzung wird üblicherweise eine andere Einspritzvorrichtung genutzt als für das Einspritzen des flüssigen Brennstoffs im Flüssigmodus. Häufig wird zudem bei der Piloteinspritzung die geringe Menge des flüssigen Brennstoffs auch nicht direkt in den Brennraum eingespritzt, sondern in mindestens eine Vorkammer, die über einen Kanal mit dem Brennraum verbunden ist.

Auch ist es bekannt, einen solchen Dual-Fuel Grossdieselmotor im Gasmodus mit einem Niederdruckverfahren zu betreiben, d.h. das Gas wird im gasförmigen Zustand in den Zylinder eingebracht, wobei der Einspritzdruck des Gases höchstens 50 bar vorzugsweise höchstens 20 bar beträgt. Dazu ist in der Zylinderwandung mindestens eine Gaseinlassöffnung vorgesehen, durch welche im Gasmodus das Gas in den Zylinder eingebracht wird. In der Praxis sind häufig zwei Gaseinlassöffnungen vorgesehen, die sich bezüglich der Zylinderachse diametral gegenüberliegen. Die Gaseinlassöffnung(en) sind dabei auf einer solchen Höhe zwischen dem unteren Umkehrpunkt und dem oberen Umkehrpunkt der Kolbenbewegung angeordnet, dass das Gas bei der Aufwärtsbewegung des Kolbens in den Zylinder eingebracht werden kann, solange noch keine oder zumindest keine wesentliche Kompression im Zylinder erfolgt ist.

Üblicherweise werden Grossdieselmotoren so ausgelegt, dass das Verdichtungsverhältnis bzw. das Kompressionsverhältnis am 100% Lastpunkt, also bei Volllast optimiert ist und der Grossdieselmotor dort einen möglichst guten Kompromiss zwischen dem Verbrennungsverhalten und dem Wirkungsgrad aufweist, das heisst, die Grossdieselmotoren sind so ausgelegt, dass sie am 100% Lastpunkt, also bei Volllast und maximaler Geschwindigkeit den höchst möglichen thermodynamischen Wirkungsgrad haben.

Das Kompressionsverhältnis ist eine geometrische Grösse, welche das Verhältnis eines ersten Volumens des Brennraumes vor dem Verdichten des Luft-Brennstoffgemisches zu einem verbliebenen zweiten Volumen des Brennraumes nach dem Verdichten des Luft-Brennstoffgemisches ist.

Die Optimierung des Brennverhaltens am 100% Lastpunkt hat zur Folge, dass in tieferen Lastbereichen, also beispielsweise bei einem tieferen Mitteldruck, der Wirkungsgrad des Grossdieselmotors nicht mehr optimal ist.

Ferner ist es bei Grossdieselmotoren, die mit mindestens zwei unterschiedlichen Brennstoffen betrieben werden -also beispielsweise Dual-Fuel Grossdieselmotorenwünschenswert, für jeden der unterschiedlichen Brennstoffe einen möglichst hohen Wirkungsgrad zu erzielen.

Aus diesen Gründen sind Grossdieselmotoren bekannt, bei denen das Kompressionsverhältnis verändert werden kann, um dadurch den Wirkungsgrad für die jeweilige Last und/oder für den jeweiligen Brennstoff zu optimieren. Derartige Ausgestaltungen werden auch als VCR-System bezeichnet (VCR: Variable Compression Ratio).

Für einen Grossdieselmotor mit Kreuzkopfantrieb ist es beispielsweise aus der EP-A-2 687 707 zur Änderung des Kompressionsverhältnisses bekannt, dass die Kolbenstange, welche im Kreuzkopfzapfen des Kreuzkopfes gelagert ist, relativ zum Kreuzkopfzapfen in Richtung der Zylinderachse verschiebbar ist. Auf diese Weise kann das Kompressionsverhältnis verändert werden. Wird beispielsweise die Kolbenstange relativ zum Kreuzkopfzapfen in Richtung des Brennraums verschoben, so resultiert hieraus ein kleineres Volumen des Brennraums bei maximaler Kompression, und somit ein grösseres Kompressionsverhältnis.

Eine wesentliche Grösse, die sowohl für die optimale Einstellung des Kompressionsverhältnisses, beispielsweise in Abhängigkeit von der momentanen Last, oder auch für die Anpassung an den gerade verwendeten Brennstoff von grosser Bedeutung ist, ist der Zylinderdruck, womit der Druck im Brennraum des Zylinders gemeint ist. Deshalb ist es üblich, für jeden Zylinder einen Drucksensor vorzusehen, mit welchem der Druck im Brennraum ermittelbar ist.

Eine bekannte Lösung ist es, einen Drucksensor vorzusehen, der möglichst nahe am Brennraum des Zylinders angeordnet ist. Dazu ist im Zylinderdeckel eine durchgängige Bohrung vorgesehen, die in den Brennraum einmündet. In der Nähe der Einmündung in den Brennraum ist diese Bohrung mit einem Gewinde versehen, sodass ein mit einem Aussengewinde versehener Drucksensor in die Bohrung eingeschraubt werden kann. Dabei ist der Drucksensor insbesondere deshalb möglichst nahe am Brennraum angeordnet, damit die Länge der Bohrung zwischen dem Drucksensor und dem Brennraum möglichst gering ist. Dieser Bereich der Bohrung stellt nämlich ein Totvolumen dar, in welchem Gas oder ein anderer Brennstoff unkontrolliert verbrennen kann. Auch werden solche Totvolumen beim Spülprozess nur sehr schlecht von der Spülluft gespült, was insbesondere im Gasmodus auch zu Methanschlupf führen kann.

Allerdings ist der Drucksensor aufgrund seiner unmittelbaren Nähe zum Brennraum sehr hohen Temperaturen ausgesetzt, welche sich negativ auf seine Lebensdauer auswirken. Auch führt die Nähe zum Brennraum dazu, dass sich durch die Verbrennung verursachte Rückstände auf der Sensoroberfläche ablagern. Häufig ist es sogar so, dass sich diese Ablagerungen nicht nur auf der Sensoroberfläche niederschlagen, sondern die gesamte Mündung der Bohrung überdecken. Um einen zuverlässigen und effizienten Betrieb des Grossmotors zu gewährleisten, muss daher der Drucksensor in regelmässigen Abständen demontiert werden, damit insbesondere die Sensoroberfläche gereinigt werden kann. Da der Drucksensor sehr tief in der Bohrung im Zylinderdeckel angeordnet ist, ist er nur schwer zugänglich. Es muss ein langes Werkzeug in die Bohrung eingeführt werden, mit welchem dann der Drucksensor aus dem Gewinde der Bohrung herausgeschraubt bzw. in dieses Gewinde eingeschraubt werden kann. Diese Servicearbeiten sind daher mit einem grossen Aufwand verbunden.

Ausgehend von diesem Stand der Technik ist es eine Aufgabe der Erfindung, einen Grossdieselmotor mit Kreuzkopfantrieb vorzuschlagen, bei welchem der Druck im Brennraum des Zylinders in zuverlässiger Weise bestimmbar ist, wobei die vorangehend genannten Probleme nicht auftreten. Ferner ist es eine Aufgabe der Erfindung, ein entsprechendes Verfahren zum Bestimmen des Zylinderdrucks in einem Grossdieselmotor vorzuschlagen.

Die diese Aufgabe lösenden Gegenstände der Erfindung sind durch die Merkmale des unabhängigen Anspruchs der jeweiligen Kategorie gekennzeichnet.

Erfindungsgemäss wird also ein Grossdieselmotor vorgeschlagen, mit mindestens einem Zylinder, welcher einen Brennraum aufweist, der durch einen Kolben begrenzt wird, welcher entlang einer Zylinderachse hin- und herbewegbar angeordnet ist, sowie mit einer rotierbaren Kurbelwelle, wobei der Kolben über eine Kolbenstange mit einem Kreuzkopf verbunden ist, der einen Kreuzkopfzapfen aufweist, wobei der Kreuzkopf über eine Schubstange mit der Kurbelwelle verbunden ist, und wobei im Kreuzkopfzapfen eine hydraulische Kammer vorgesehen ist, welche durch die Kolbenstange begrenzt wird, und mittels welcher die Kolbenstange zum Einstellen eines Kompressionsverhältnisses relativ zum Kreuzkopfzapfen in Richtung der Zylinderachse verschiebbar ist. Es ist ein Drucksensor vorgesehen, mit welchem ein hydraulischer Druck bestimmbar ist, der in der hydraulischen Kammer herrscht, sowie eine Auswerteeinheit, mit welcher ein im Brennraum herrschender Zylinderdruck mittels des hydraulischen Drucks bestimmbar ist.

Der im Brennraum herrschende Zylinderdruck wird also mit Hilfe des hydraulischen Drucks gemessen, welcher in der hydraulischen Kammer herrscht, mit der die Kolbenstange zur Einstellung des Kompressionsverhältnis verschiebbar ist. Da die Kolbenstange die hydraulische Kammer begrenzt, wird der brennraumseitig auf den Kolben wirkende Zylinderdruck über die Kolbenstange auf die hydraulische Kammer übertragen. Der Drucksensor misst den hydraulischen Druck, der in der hydraulischen Kammer wirkt und übermittelt diesen Messwert an die Auswerteeinheit, welche aus diesem Messwert den Zylinderdruck im Brennraum bestimmt. Dabei ist es möglich, aber nicht notwendig, den in der hydraulischen Kammer herrschenden Druck mittels eines Druckreduzierers auf einen geringeren Druck zu reduzieren, der proportional zum hydraulischen Druck in der hydraulischen Kammer ist, diesen reduzierten Druck messtechnisch zu erfassen und aus diesem Messwert dann den im Brennraum herrschenden Druck zu bestimmen.

Folglich bedarf es keines Drucksensors mehr, welcher in unmittelbarer Nähe des Brennraums angeordnet ist. Somit lassen sich alle die vorangehend beschriebenen Probleme vermeiden, die aus der Anordnung eines Drucksensors nahe am Brennraum und beispielsweise im Zylinderdeckel resultieren.

Eine mögliche Ausführungsform der Erfindung besteht darin, dass der Drucksensor am Kreuzkopf angeordnet ist, derart, dass sich der Drucksensor gemeinsam mit dem Kreuzkopf bewegt. Der Drucksensor bewegt sich also relativ zum Kreuzkopf nicht und führt die gleiche Bewegung aus wie der Kreuzkopf. Die vom Drucksensor ermittelten Messwerte werden dann an die typischerweise stationäre Auswerteeinheit übertragen. Diese Übertragung vom Drucksensor zur Auswerteeinheit kann beispielsweise drahtlos erfolgen, z.B. mit einem Sender am Drucksensor und einem Empfänger an der Auswerteeinheit. Auch ist es möglich, die Übertragung mittels eines flexiblen Kabels durchzuführen, welches die Auswerteeinheit mit dem relativ zu ihr bewegbaren Drucksensor verbindet. Ein solches Kabel kann beispielsweise an oder in einem Kniehebel angeordnet werden. Solche Kniehebel, die zwischen dem stationären Motorengehäuse und dem sich im Betriebszustand bewegenden Kreuzkopf angeordnet sind, sind typischerweise an einem Grossdieselmotor vorgesehen, beispielsweise, um Schmier- oder Kühlmedien in den Kreuzkopf oder in die Kolbenstange einzubringen. Auch kann für die Führung eines solchen Kabels ein Kniehebel verwendet werden, mit welchem der hydraulischen Kammer ein Hydraulikmedium zum Verschieben der Kolbenstange zugeführt wird.

Gemäss eines bevorzugten Ausführungsbeispiels ist der Drucksensor an einer Messstelle vorgesehen, welche stationär bezüglich des Motorengehäuses angeordnet ist. Bei diesem Ausführungsbeispiel bewegt sich also der Drucksensor während des Betriebs des Grossdieselmotors nicht, sondern ist ortsfest angeordnet, d.h. der Drucksensor bewegt sich relativ zum Motorengehäuse nicht, jedoch bewegt sich der Kreuzkopf relativ zum Drucksensor.

Vorzugsweise ist dann eine hydraulische Druckübertragungsvorrichtung vorgesehen, mit welcher der in der hydraulischen Kammer herrschende hydraulische Druck an den Drucksensor übertragbar ist. Durch die hydraulische Druckübertragungsvorrichtung lässt es sich in einfacher Weise realisieren, dass der stationär angeordnete Drucksensor mit einem Druck beaufschlagbar ist, der gleich oder proportional zu dem hydraulischen Druck in der hydraulischen Kammer im Kreuzkopf ist.

Besonders bevorzugt umfasst die hydraulische Druckübertragungsvorrichtung einen Kniehebel, welcher einerseits mit dem Kreuzkopf verbunden ist, und andererseits mit dem Motorengehäuse. Hierbei ist es möglich, für die Druckübertragungsvorrichtung einen eigenen, separaten Kniehebel vorzusehen, oder einen anderen, vorhandenen Kniehebel für die Druckübertragungsvorrichtung zu nutzen.

Der Kniehebel der hydraulischen Drückübertragungsvorrichtung umfasst vorzugsweise eine Zuführung, mit welcher der hydraulischen Kammer ein Hydraulikmedium zuführbar ist. Es ist also bevorzugt für die hydraulische Druckübertragungsvorrichtung denselben Kniehebel zu verwenden, über welchen das Hydraulikmedium in die hydraulische Kammer eingebracht wird.

Eine weitere bevorzugte Massnahme besteht darin, dass der Kniehebel eine Steuerleitung für ein Entlastungsventil zum Ablassen des Hydraulikmediums aus der hydraulischen Kammer umfasst.

Ferner ist es bevorzugt, dass die hydraulische Druckübertragungsvorrichtung einen Druckreduzierer umfasst, der mit dem in der hydraulischen Kammer herrschenden hydraulischen Druck beaufschlagbar ist, und diesen Druck reduziert. Dies hat den Vorteil, dass nicht der hohe hydraulische Druck übertragen werden muss, der in der hydraulischen Kammer herrscht, sondern lediglich ein reduzierter hydraulischer Druck, der proportional zum Druck in der hydraulischen Kammer ist. Im Betriebszustand kann der Druck in der hydraulischen Kammer nämlich durchaus bis zu einigen hundert bar (1 bar = 0.1 MPa) betragen, beispielsweise 500-600 bar (50 - 60 MPa).

Vorzugsweise ist der Druckreduzierer am Kreuzkopf angeordnet. Der Druckreduzierer bewegt sich dann gemeinsam mit dem Kreuzkopf, sodass lediglich der reduzierte Druck von dem sich bewegenden Kreuzkopf an die stationär bezüglich des Motorengehäuses angeordnete Messstelle übertragen werden muss.

Ferner ist es bevorzugt, dass der Druckreduzierer eine Hochdruckseite und eine Niederdruckseite umfasst, wobei die Hochdruckseite in Strömungsverbindung mit der hydraulischen Kammer steht, und wobei der Drucksensor mit dem auf der Niederdruckseite herrschenden Druck beaufschlagbar ist.

Beispielsweise ist der Druckreduzierer mit einer Auslassleitung zum Abführen des Hydraulikmediums aus der hydraulischen Kammer strömungsverbunden. Dabei ist diese Strömungsverbindung stromaufwärts eines Absperrventils vorgesehen, über welches das Hydraulikmedium aus der hydraulischen Kammer abführbar ist.

Eine weitere bevorzugte Massnahme besteht darin, dass der Niederdruckseite des Druckreduzierers Hydraulikmedium zuführbar ist. Auf diese Weise kann der Druckreduzierer wieder in seine Ausgangskonfiguration gebracht werden.

Vorzugsweise ist der Grossdieselmotor als längsgespülter Zweitakt-Grossdieselmotor ausgestaltet.

Besonders bevorzugt ist der Grossdieselmotor als Dual-Fuel Grossdieselmotor ausgestaltet, der in einem Flüssigmodus betreibbar ist, in welchem ein flüssiger Brennstoff zur Verbrennung in den Brennraum eingebracht wird, und der ferner in einem Gasmodus betreibbar ist, in welchem ein Gas zur Verbrennung in den Brennraum eingebracht wird.

Durch die Erfindung wird ferner ein Verfahren vorgeschlagen zum Bestimmen des Zylinderdrucks in einem Grossdieselmotor mit mindestens einem Zylinder, welcher einen Brennraum aufweist, der durch einen Kolben begrenzt wird, welcher entlang einer Zylinderachse hin- und herbewegbar angeordnet ist, sowie mit einer rotierbaren Kurbelwelle, wobei der Kolben über eine Kolbenstange mit einem Kreuzkopf verbunden ist, der einen Kreuzkopfzapfen aufweist, wobei der Kreuzkopf über eine Schubstange mit der Kurbelwelle verbunden ist, und wobei im Kreuzkopfzapfen eine hydraulische Kammer vorgesehen ist, welche durch die Kolbenstange begrenzt wird, und mittels welcher die Kolbenstange zum Einstellen eines Kompressionsverhältnisses relativ zum Kreuzkopfzapfen in Richtung der Zylinderachse verschiebbar ist. Erfindungsgemäss wird mittels eines Drucksensor der hydraulische Druck in der hydraulischen Kammer bestimmt, und mittels einer Auswerteeinheit wird der im Brennraum herrschender Zylinderdruck mittels des hydraulischen Drucks bestimmt.

Bei dem erfindungsgemässen Verfahren wird also der im Brennraum herrschende Druck mittels des hydraulischen Drucks bestimmt, der in der hydraulischen Kammer herrscht. Folglich bedarf es keines Drucksensors mehr, welcher in unmittelbarer Nähe des Brennraums angeordnet ist. Somit lassen sich alle die vorangehend beschriebenen Probleme vermeiden, die aus der Anordnung eines Drucksensors nahe am Brennraum und beispielsweise im Zylinderdeckel resultieren.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der Zeichnung zeigen:
- Fig. 1:: eine schematische Schnittdarstellung eines ersten Ausführungsbeispiels eines erfindungsgemässen Grossdieselmotors,
- Fig. 2:: eine schematische Schnittdarstellung eines zweiten Ausführungsbeispiels eines erfindungsgemässen Grossdieselmotors,
- Fig. 3:: eine schematische Schnittdarstellung eines dritten Ausführungsbeispiels eines erfindungsgemässen Grossdieselmotors,
- Fig. 4:: eine schematische Schnittdarstellung eines vierten Ausführungsbeispiels eines erfindungsgemässen Grossdieselmotors, und
- Fig. 5:: eine schematische Schnittdarstellung eines fünften Ausführungsbeispiels eines erfindungsgemässen Grossdieselmotors.

Mit dem Begriff "Grossdieselmotor" sind solche Motoren gemeint, wie sie üblicherweise als Hauptantriebsaggregate für Schiffe oder auch im stationären Betrieb, z.B. zum Antrieb grosser Generatoren zur Erzeugung elektrischer Energie eingesetzt werden. Typischerweise haben die Zylinder eines Grossdieselmotors jeweils einen Innendurchmesser (Bohrung), der mindestens etwa 200 mm beträgt. Mit dem Begriff "längsgespült" ist gemeint, dass die Spül- oder Ladeluft im Bereich des unteren Endes in den Zylinder eingebracht wird. Die Verbrennungsrückstände, also insbesondere die Abgase, werden am oberen Ende des Zylinders ausgetragen.

Bei der folgenden Beschreibung der Erfindung wird auf einen Grossdieselmotor Bezug genommen, der als Dual-Fuel Grossdieselmotor ausgestaltet ist, also als ein Motor, der mit zwei unterschiedlichen Brennstoffen betrieben werden kann. Im Speziellen kann der Dual-Fuel Grossdieselmotor in einem Flüssigmodus betrieben werden, in welchem nur ein flüssiger Brennstoff in einen Brennraum eines Zylinders eingespritzt wird. Üblicherweise wird der flüssige Brennstoff, beispielsweise Schweröl oder ein Dieselöl, zu einem geeigneten Zeitpunkt direkt in den Brennraum eingespritzt und entzündet sich dort nach dem Diesel-Prinzip der Selbstzündung. Der Grossdieselmotor kann auch in einem Gasmodus betrieben werden, bei dem ein als Brennstoff dienendes Gas, beispielsweise ein Erdgas wie LNG (Liquefied Natural Gas) oder LPG (Liquefied Petroleum Gas) oder Ethan, in Form eines vorgemischten Luft-Brennstoff-Gemisches im Brennraum durch Fremdzündung zur Verbrennung gebracht wird.

Wie vorangehend bereits erläutert, ist der Begriff "Gasmodus" bzw. "Betrieb im Gasmodus" im Rahmen dieser Anmeldung so zu verstehen, dass der Grossdieselmotor in diesem Gasmodus nur mit Gas bzw. mit einem gasförmigen Brennstoff betrieben wird, wobei optional eine geringe Menge eines selbstzündenden Brennstoffs, z.B. Schweröl oder Dieselöl, lediglich zur Fremdzündung des Luft-Gas-Gemisches in den Brennraum oder eine Vorkammer oder mehrerer Vorkammern eingebracht wird (Piloteinspritzung).

Im Speziellen arbeitet der Grossdieselmotor im Gasmodus nach einem Niederdruckverfahren, d.h. das Gas wird im gasförmigen Zustand in den Zylinder eingebracht, wobei der Einspritzdruck, mit welchem das Gas in den Zylinder eingebracht wird, höchstens 50 bar und vorzugsweise höchstens 20 bar beträgt. Das Luft-Gas-Gemisch wird im Brennraum nach dem Otto-Prinzip fremdgezündet. Diese Fremdzündung wird vorzugsweise dadurch bewirkt, dass zu einem geeigneten Moment eine kleine Menge selbstzündender flüssiger Brennstoff (z. B. Diesel- oder Schweröl) in den Brennraum oder in eine Vorkammer oder in mehrere Vorkammern eingebracht wird, der sich dann selbst entzündet und dadurch die Fremdzündung des Luft-Brennstoff-Gemisches im Brennraum verursacht.

Bei dem hier beschriebenen Ausführungsbeispiel wird auf einen Grossdieselmotor Bezug genommen, der als längsgespülter Dual-Fuel Zweitakt-Grossdieselmotor mit Kreuzkopfantrieb ausgestaltet ist. Natürlich ist die Erfindung nicht auf Dual-Fuel Grossdieselmotoren beschränkt, sondern betrifft jede Art von Grossdieselmotoren, also Grossmotoren, die zumindest in einem Dieselbetrieb betrieben werden können.

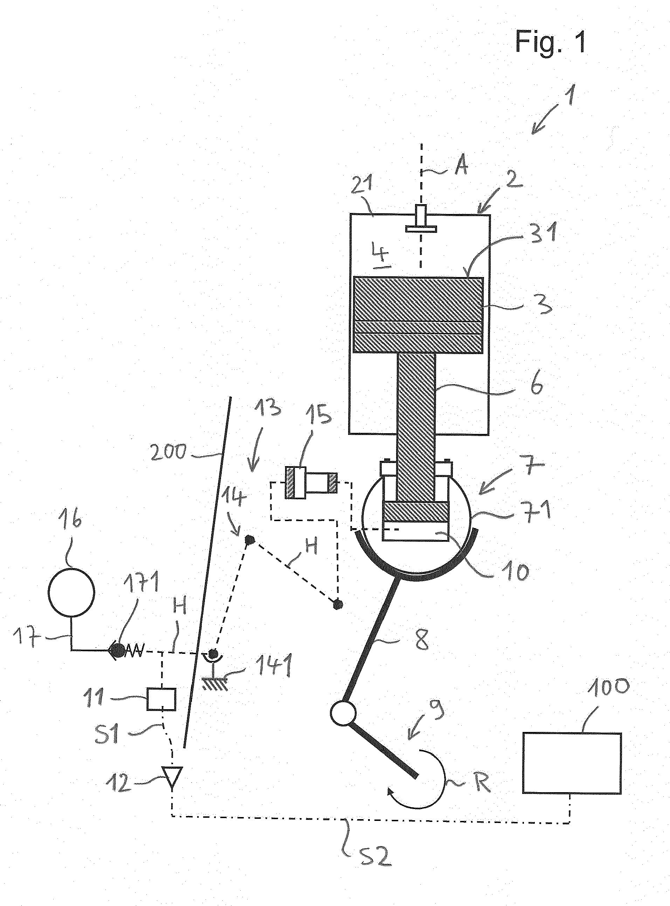

Fig. 1 zeigt in einer stark schematisierten Darstellung ein erstes Ausführungsbeispiel eines erfindungsgemässen Grossdieselmotors, der gesamthaft mit dem Bezugszeichen 1 bezeichnet ist. In Fig. 1 ist nur ein Zylinder 2 der üblicherweise mehreren Zylinder 2 des Grossdieselmotors 1 dargestellt.

Im Inneren des Zylinders 2 ist in an sich bekannter Art ein Kolben 3 angeordnet, welcher entlang einer Zylinderachse A zwischen einem unteren Umkehrpunkt und einem oberen Umkehrpunkt hin- und herbewegbar angeordnet ist.

Der Kolben 3 hat eine Oberseite 31, welche gemeinsam mit einem Zylinderdeckel 21 einen Brennraum 4 begrenzt, in welchem der Verbrennungsprozess stattfindet.

Wie das von einem Kreuzkopfantrieb bekannt ist, ist der Kolben 3 über eine Kolbenstange 6 mit einem Kreuzkopf 7 verbunden, welcher über eine Schubstange 8 mit einer Kurbelwelle 9 verbunden ist, sodass die Bewegung des Kolbens 3 über die Kolbenstange 6, den Kreuzkopf 7 und die Schubstange 8 auf die Kurbelwelle 9 übertragen wird, um diese zu drehen. Die Rotation der Kurbelwelle ist durch den Pfeil mit dem Bezugszeichen R angedeutet. Der Kreuzkopf 7 ist in an sich bekannter Weise so ausgestaltet, dass er die geradlinige Auf- und Abbewegung des Kolbens 3 und der Kolbenstange 6 in eine Rotationsbewegung der Schubstange 8 umsetzt, wobei die Schubstange 8 um einen Kreuzkopfzapfen 71 des Kreuzkopfes 7 schwenkbar gelagert ist.

Der Aufbau und die einzelnen Komponenten des Grossdieselmotors 1, wie beispielsweise das Einspritzsystem für den Flüssigmodus (nicht dargestellt), das Gaszuführsystem für den Gasmodus (nicht dargestellt), das Gaswechselsystem, das Abgassystem (nicht dargestellt) oder das Turboladersystem (nicht dargestellt) für die Bereitstellung der Spül- bzw. Ladeluft für einen solchen Grossdieselmotor 1 sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Da es für das Verständnis der Erfindung ausreicht, ist von diesen Komponenten in Fig. 1 nur ein Auslassventil 5 dargestellt. Das Gaszuführsystem für den Gasmodus umfasst üblicherweise zwei Gaseinlassöffnungen (nicht dargestellt), durch welche im Gasmodus das als Brennstoff dienende Gas in den Zylinder 2 eingebracht wird. Die beiden Gaseinlassöffnungen sind vorzugsweise in der Wandung des Zylinders 2 angeordnet, und zwar besonders bevorzugt derart, dass sie sich diametral gegenüber liegen und bezüglich der durch die Zylinderachse A festgelegten axialen Richtung etwa in der Mitte zwischen dem oberen und dem unteren Umkehrpunkt angeordnet sind.

Ferner ist ein Motorensteuerungssystem 100 vorgesehen, mit welchem die Funktionen und der Betrieb des Grossdieselmotors 1 gesteuert werden. Das Motorensteuerungssystem 100 ist in modernen Grossdieselmotoren 1 ein elektronisches System, mit welchem sich üblicherweise alle Motor- oder Zylinderfunktionen, insbesondere die Einspritzung (Beginn und Ende der Einspritzung) sowohl im Gasmodus als auch im Flüssigmodus, und die Betätigung des Auslassventils 5 einstellen oder steuern bzw. regeln lassen.

Bei dem hier beschriebenen Ausführungsbeispiel eines längsgespülten Zweitakt-Grossdieselmotors sind üblicherweise im unteren Bereich eines jeden Zylinders 2 bzw. Zylinderliners Spülluftschlitze (nicht dargestellt) vorgesehen, die durch die Bewegung des Kolbens 3 im Zylinder 2 periodisch verschlossen und geöffnet werden, sodass die von einem Turbolader unter einem Ladeluftdruck in einem Einlassreceiver (nicht dargestellt) bereitgestellte Spülluft durch die Spülluftschlitze in den Zylinder 2 einströmen kann, solange diese geöffnet sind. Im Zylinderkopf bzw. im Zylinderdeckel 21 ist das meistens zentral angeordnete Auslassventil 5 vorgesehen, durch welches die Verbrennungsgase nach dem Verbrennungsprozess aus dem Zylinder 2 in das Abgassystem (nicht dargestellt) ausgetragen werden können. Das Abgassystem leitet zumindest einen Teil der Verbrennungsgase zu einer Turbine (nicht dargestellt) des Turboladers, dessen Kompressor die Ladeluft im Einlassreceiver unter dem Ladeluftdruck bereitstellt.

Für das Einbringen des flüssigen Brennstoffs in den Brennraum 4 des Zylinders 2 im Flüssigmodus sind ein oder mehrere Brennstoffeinspritzdüsen vorgesehen (nicht dargestellt), die beispielsweise im Zylinderdeckel 21 in der Nähe des Auslassventils 5 angeordnet sind. Als flüssiger Brennstoff kann im Flüssigmodus beispielsweise Schweröl oder ein Dieselöl verbrannt werden.

Für die Gaszuführung bzw. das Einbringen des Gases im Gasmodus ist ein an sich bekanntes Gaszuführsystem vorgesehen, welches die Gaseinlassöffnungen (nicht dargestellt) umfasst. Die Gaseinlassöffnungen sind vorzugsweise jeweils als Gaseinlassventil mit einer Gaseinlassdüse ausgestaltet.

Die Kolbenstange 6 ist mit ihrem darstellungsgemäss unteren Ende in dem Kreuzkopfzapfen 71 angeordnet. Ferner ist im Kreuzkopfzapfen 71 eine hydraulische Kammer 10 zum Einstellen eines Kompressionsverhältnisses vorgesehen. Das Kompressionsverhältnis ist eine geometrische Grösse, welche das Verhältnis eines ersten Volumens des Brennraumes 4 vordem Verdichten der Spülluft bzw. des Luft-Brennstoffgemisches zu einem verbliebenen zweiten Volumen des Brennraumes 4 nach dem Verdichten der Spülluft bzw. des Luft-Brennstoffgemisches ist. Das erste Volumen ist das Volumen des Brennraums 4 unmittelbar nach dem Schliessen des Auslassventils 5, also zu dem Zeitpunkt, wenn bei der Aufwärtsbewegung des Kolbens 3 die Kompression beginnt. Das zweite Volumen ist das Volumen des Brennraums 4 bei maximaler Kompression der Spülluft bzw. des Luft-Brennstoffgemisches. Dies ist im Wesentlichen das Volumen des Brennraums 4 beim Beginn des Verbrennungsprozesses.

Vorrichtungen zum Ändern des Kompressionsverhältnisses sind aus dem Stand der Technik bekannt, beispielsweise aus der EP-A-2 687 707 und benötigen daher hier keine detaillierte Erläuterung.

Bei dem erfindungsgemässen Grossdieselmotor 1 ist die hydraulische Kammer 10 zum Einstellen des Kompressionsverhältnisses derart ausgestaltet, dass die im Kreuzkopfzapfen 71 angeordnete Kolbenstange 6 gesamthaft relativ zum Kreuzkopfzapfen 71 in Richtung der Zylinderachse A verschiebbar ist. Dazu ist die Kolbenstange 6 derart ausgestaltet und angeordnet, dass sie die hydraulische Kammer 10 begrenzt. Durch Einbringen eines Hydraulikmediums, beispielsweise ein Hydrauliköl, in die hydraulischen Kammer 10 bzw. durch Ablassen des Hydraulikmediums aus der hydraulischen Kammer 10 kann die Kolbenstange 6 relativ zum Kreuzkopfzapfen 71 verschoben werden. Gemäss der Darstellung in Fig. 1 kann also die Kolbenstange 6 und damit auch der Kolben 3 relativ zum Kreuzkopfzapfen 71 nach oben oder nach unten verschoben werden. Wird die Kolbenstange 6 durch Einbringen des Hydraulikmediums in die hydraulische Kammer 10 darstellungsgemäss nach oben verschoben, so wird dadurch das zweite Volumen, also das Volumen bei maximaler Kompression, verkleinert, wodurch sich das Kompressionsverhältnis vergrössert. Wird die Kolbenstange 6 durch Abführen des Hydraulikmediums aus der hydraulischen Kammer 10 darstellungsgemäss nach unten verschoben, so wird dadurch das zweite Volumen, also das Volumen bei maximaler Kompression, vergrössert, wodurch sich das Kompressionsverhältnis verkleinert. Mittels der hydraulischen Kammer 10 ist also das Kompressionsverhältnis stufenlos zwischen einem Minimalwert und einem Maximalwert einstellbar.

Dadurch ist es möglich, das Kompressionsverhältnis für jede Last, mit welcher der Grossdieselmotor 1 betrieben wird, optimal einzustellen, sodass für jede Last ein möglichst effizienter Verbrennungsprozess stattfindet. Ferner ist es für Dual-Fuel Grossdieselmotoren zusätzlich möglich, das Kompressionsverhältnis für den jeweiligen Brennstoff jeweils optimal einzustellen. Beispielsweise kann der Grossdieselmotor 1 im Gasmodus mit einem niedrigeren Kompressionsverhältnis betrieben werden als im Flüssigmodus.

Zudem ist es möglich, das Kompressionsverhältnis auch in Abhängigkeit von anderen Betriebsbedingungen oder Betriebsparametern optimal einzustellen, beispielsweise in Abhängigkeit von der Temperatur der Spülluft (Ladeluft), der Methanzahl des Gases, das im Gasmodus als Brennstoff dient, oder in Abhängigkeit von anderen Betriebsparametern.

Erfindungsgemäss ist ein Drucksensor 11 vorgesehen, mit welchem ein hydraulischer Druck bestimmbar ist, der in der hydraulischen Kammer 10 herrscht, sowie eine Auswerteeinheit 12, mit welcher ein im Brennraum 4 herrschender Zylinderdruck mittels des hydraulischen Drucks bestimmbar ist.

Über den Kolben 3, dessen Oberseite 31 den Brennraum 4 begrenzt, und die Kolbenstange 6 wird der im Brennraum herrschende Zylinderdruck auf das Hydraulikmedium in der hydraulischen Kammer 10 übertragen und verändert somit den in der hydraulischen Kammer 10 herrschenden hydraulischen Druck. Daher kann aus der Bestimmung des hydraulischen Drucks in der hydraulischen Kammer 10 der Zylinderdruck im Brennraum 4 ermittelt werden.

Bei dem in Fig. 1 dargestellten ersten Ausführungsbeispiel ist der Drucksensor 11 an einer Messstelle vorgesehen welche stationär bezüglich eines Motorengehäuses 200 angeordnet ist. In Fig. 1 ist das Motorengehäuse 200 durch die Linie 200 angedeutet. Das Motorengehäuse 200, das beispielsweise den Ständer umfasst, in welchem die Gleitbahnen für die Kreuzköpfe 7 angeordnet sind, ist in dem Sinne stationär, dass es sich während des Betriebs des Grossdieselmotors 1 relativ zu dem Raum in welchem der Grossdieselmotor 1 angeordnet ist, nicht bewegt, natürlich abgesehen von Vibrationen. Dagegen sind die Antriebskomponenten, also insbesondere der Kolben 3, die Kolbenstange 6, der Kreuzkopf 7 die Schubstange 8 und die Kurbelwelle 9 während des Betriebs des Grossdieselmotors 1 relativ zum Motorengehäuse 200 in Bewegung, also nicht stationär. In diesem Sinne sind die Begriffe "stationär" und "nicht stationär" zu verstehen: Eine stationäre Komponente bewegt sich während des Betriebs des Grossdieselmotors 1 relativ zum Motorengehäuse 200 nicht. Eine nicht stationäre Komponente bewegt sich während des Betriebs des Grossdieselmotors 1 relativ zum Motorengehäuse 200. So ist beispielsweise der Kolben 3 aufgrund seiner Hubbewegung eine nicht stationäre Komponente.

Um den hydraulischen Druck, der in der hydraulischen Kammer 10 herrscht, auf den stationär angeordneten Drucksensor 11 zu übertragen, ist eine hydraulische Druckübertragungsvorrichtung 13 vorgesehen. Die Druckübertragungsvorrichtung 13 umfasst eine Hydraulikleitung H, welche einerseits mit der hydraulischen Kammer 10 in Verbindung steht, und andererseits den Drucksensor 11 mit Druck beaufschlagt. Die Hydraulikleitung H ist in Fig. 1 strichliert dargestellt.

Die hydraulische Druckübertragungsvorrichtung 13 umfasst ferner einen Kniehebel 14, welcher in an sich bekannter Weise einerseits am nicht stationären Kreuzkopf 7 befestigt ist, und andererseits an einem Fixpunkt 141, der stationär bezüglich des Motorengehäuses 200 angeordnet ist. Der Kniehebel 14, der auch als Schwenk- oder Schwinghebel bezeichnet wird, kann also mit seinem einen Ende der Bewegung des Kreuzkopfes 7 folgen, während sein anderes Ende an dem Fixpunkt 141 stationär zum Motorengehäuse 200 befestigt ist. Die Hydraulikleitung H kann an oder in dem Kniehebel 14 angeordnet sein.

Vorzugsweise umfasst die hydraulische Druckübertragungsvorrichtung 13 einen Druckreduzierer 15, um den in der hydraulischen Kammer 10 herrschenden hydraulischen Druck auf einen geringeren Druck zu reduzieren, mit welchem dann der Drucksensor 11 beaufschlagt wird. Der Druckreduzierer 15 ist vorzugsweise am Kreuzkopf 7 angeordnet und fixiert, sodass er sich gemeinsam mit dem Kreuzkopf 7 bewegt. Der Druckreduzierer 15 ist in der Hydraulikleitung H angeordnet, derart dass er hochdruckseitig mit der hydraulischen Kammer 10 strömungsverbunden ist und mit dem in der hydraulischen Kammer 10 herrschenden Druck beaufschlagt wird. Niederdruckseitig ist der Druckreduzierer 15 mit dem Drucksensor 11 verbunden, sodass der Drucksensor 11 mit dem reduzierten Druck beaufschlagt wird. Der Druckreduzierer 15 hat den Vorteil, dass nicht der komplette hydraulische Druck, der in der hydraulischen Kammer 10 wirkt, vom Kreuzkopf 7 auf die stationäre Messstelle, an welcher der Drucksensor 11 angeordnet ist, übertragen werden muss, sondern lediglich der reduzierte Druck. Diese Druckreduktion durch den Druckreduzierer 15 wird in der Auswerteeinheit 12 bei der Ermittlung des Zylinderdrucks berücksichtigt.

Vorzugsweise ist der Druckreduzierer 15 -wie in Fig. 1 dargestellt - horizontal angeordnet, sodass Beschleunigungseffekte des sich in vertikaler Richtung bewegenden Kreuzkopfs 7 die Druckübertragung im Druckreduzierer 15 nicht beeinflussen. Der Druckreduzierer 15 kann beispielsweise einen Druckkolben umfassen, der zwei mit Druck beaufschlagte Flächen aufweist, welche unterschiedlich gross sind, um dadurch die Druckreduzierung zu realisieren. Der Druckkolben ist dann so angeordnet, dass er sich in horizontaler Richtung verschiebt, also senkrecht zu der Bewegungsrichtung des Kreuzkopfs 7 bzw. der Kolbenstange 6.

Der Drucksensor 11 ist mit der Auswerteeinheit 12 signalverbunden. Diese Signalverbindung ist beispielsweise durch eine erste Signalleitung S1 realisiert. Die Signalverbindungen sind in Fig. 1 punktstrichliert dargestellt. Die Auswerteinheit 12 ist mit dem Motorensteuerungssystem 100 signalverbunden. Diese Signalverbindung ist beispielsweise durch eine zweite Signalleitung S2 realisiert. Der von der Auswerteeinheit 12 ermittelte Zylinderdruck wird über die zweite Signalleitung S2 an das Motorensteuerungssystem 100 übermittelt, sodass dieses den Zylinderdruck im Brennraum 4 des Zylinders 2 kennt.

In der Auswerteeinheit 12 ist ein Berechnungsverfahren hinterlegt, mit welchem die Auswerteeinheit 12 aus dem vom Drucksensor 11 gemessenen Druck oder Signal den Zylinderdruck im Brennraum 4 des Zylinders 2 ermittelt. Dieses Berechnungsverfahren berücksichtigt die Druckreduzierung durch den Druckreduzierer 15. Das Berechnungsverfahren kann auch noch weitere Grössen berücksichtigen, beispielsweise dynamische Kräfte, wie die Zentrifugalkraft oder die Fliehkraft, welche aus der Bewegung des Kolbens 3 resultieren, um aus dem vom Drucksensor 11 übermittelten Messwert eine möglichst genaue Bestimmung des Zylinderdrucks zu gewährleisten. Solche dynamischen Kräfte, die aus der Bewegung des Kolbens 3 und der Kolbenstange 6 resultieren, können beispielsweise von der Drehzahl abhängen, mit welcher der Grossdieselmotor 1 aktuell betrieben wird.

Um eventuelle Leckagen von Hydraulikmedium zu kompensieren, beispielsweise Leckagen, die am Kniehebel 14 oder am Druckreduzierer 15 auftreten können, ist ein erstes Reservoir 16 für das Hydraulikmedium vorgesehen. Das erste Reservoir 16 ist über eine Nachfüllleitung 17 mit der Hydraulikleitung H verbunden, wobei die Nachfüllleitung an einer Stelle in die Hydraulikleitung H mündet, die zwischen dem Fixpunkt 141 und dem Drucksensor 11 angeordnet ist, das heisst die Einmündung der Nachfüllleitung 17 ist im stationären Bereich der Hydraulikleitung H vorgesehen. In der Nachfüllleitung 17 ist zwischen ihrer Einmündung in die Hydraulikleitung H und dem ersten Reservoir 16 ein erstes Rückschlagventil 171 vorgesehen, das so angeordnet ist, dass das Hydraulikmedium aus dem ersten Reservoir 16 in die Hydraulikleitung H strömen kann, nicht aber aus der Hydraulikleitung H in das erste Reservoir 16. Das aus der Nachfüllleitung 17 in die Hydraulikleitung H eingebrachte Hydraulikmedium kann auch dazu verwendet werden, um den Druckreduzierer 15 wieder in seine Ausgangsposition zu bringen, beispielsweise indem ein im Druckreduzierer 15 vorgesehenen Druckkolben darstellungsgemäss nach rechts -also zur Hochdruckseite hin - bewegt wird. Ferner ist zwischen dem ersten Rückschlagventil 171 und dem ersten Reservoir 16 eine zweite Drosseleinrichtung 175 in der Nachfüllleitung 17 vorgesehen.

Das Nachfüllen von Hydraulikmedium aus dem ersten Reservoir 16 in die Hydraulikleitung H bzw. das Rückstellen des Druckreduzierers 15 erfolgt vorzugsweise, wenn sich der Kolben 3 im unteren Umkehrpunkt seiner Bewegung befindet oder in der Nähe des unteren Umkehrpunkts seiner Bewegung. In dieser Phase der periodischen Bewegung des Kolbens 3 ist der auf die Oberseite des Kolben 31 wirkende Druck im Brennraum 4 minimal, sodass auch der hydraulische Druck in der hydraulischen Kammer 10 minimal ist. Der Druck, mit welchem das Hydraulikmedium in dem ersten Reservoir 16 vorliegt, ist so gross, dass das Hydraulikmedium durch die Nachfüllleitung 17 in die Hydraulikleitung H einströmen kann, wenn sich der Kolben 3 im Bereich seines unteren Umkehrpunkts befindet. Beispielsweise beträgt der Druck des Hydraulikmediums im ersten Reservoir 16 wenige bar, z. B. weniger als zehn bar (ein MPa) oder etwa 4-5 bar (0.4-0.5 MPa). Dieser Druck wird gross genug gewählt, sodass das Hydraulikmedium durch das Rückschlagventil 171 in die Hydraulikleitung H strömen kann, wenn sich der Kolben 3 im Bereich seines unteren Umkehrpunkts befindet. Wenn der Druckreduzierer 15 wieder in seine Ausgangsposition ist, schliesst das Rückschlagventil 171. Bei dem anschliessenden Kompressionshub des Kolbens 3 steigt der hydraulische Druck in der hydraulischen Kammer 10 an und damit auch der Druck in der hydraulischen Leitung H. Natürlich ist es grundsätzlich auch möglich, das Hydraulikmedium im ersten Reservoir 16 mit einem höheren Druck von beispielsweise bis zu 100 bar bereitzustellen, bevorzugt sind jedoch Drücke von weniger als 16 bar, weil dann das erste Reservoir 16 und seine Versorgungskomponenten nicht als Hochdrucksystem anzusehen sind und daher einwandig ausgestaltet werden können.

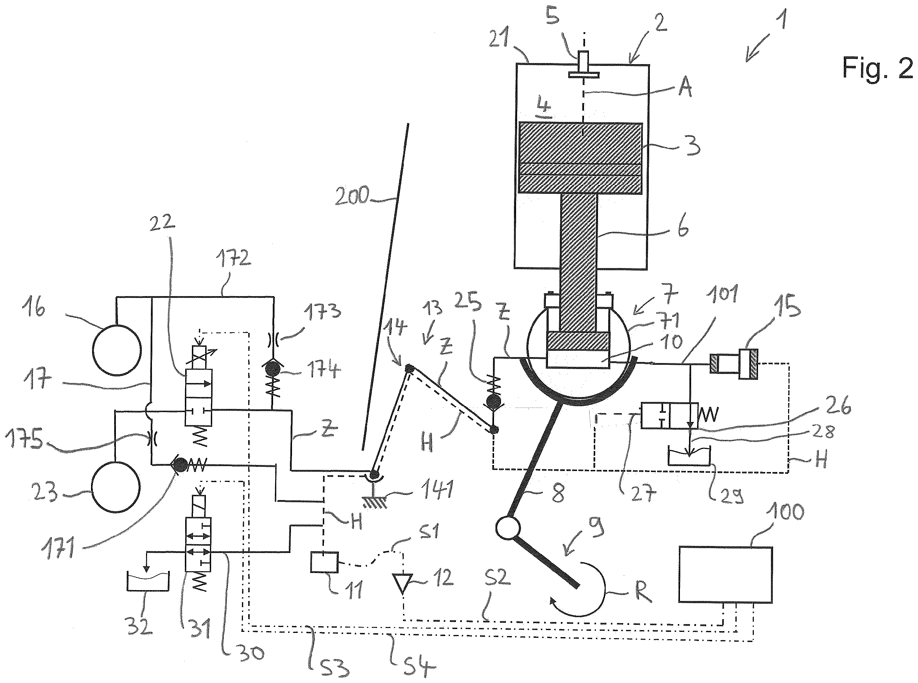

Fig. 2 veranschaulicht in einer schematischen Darstellung ein zweites Ausführungsbeispiels eines erfindungsgemässen Grossdieselmotors 1. Bei der folgenden Beschreibung des zweiten Ausführungsbeispiels wird nur auf die Unterschiede zu dem ersten Ausführungsbeispiel näher eingegangen. Ansonsten gelten die Erläuterungen des ersten Ausführungsbeispiels in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel.

Bei dem zweiten Ausführungsbeispiel wird der Kniehebel 14 der Druckübertragungsvorrichtung 13 auch noch für andere Zwecke genutzt als für die Hydraulikleitung H. Bei dem zweiten Ausführungsbeispiel ist also der Kniehebel 14 nicht als separater Kniehebel 14 ausgestaltet, der ausschliesslich für die Druckübertragungsvorrichtung 13 genutzt wird, sondern der Kniehebel 14 dient auch noch anderen Zwecken. Bei dem zweiten Ausführungsbeispiel wird der Kniehebel 14 zusätzlich für das Einbringen von Hydraulikmedium in die hydraulische Kammer 10 genutzt, sowie für das Ansteuern der Druckentlastung der hydraulischen Kammer 10.

Dazu umfasst der Kniehebel eine Zuführung Z, mit welcher der hydraulischen Kammer 10 das Hydraulikmedium zuführbar ist. Die Zuführung Z ist beispielsweise als Leitung ausgestaltet, die im oder am Kniehebel 14 angeordnet ist. Zum besseren Verständnis ist die Zuführung Z mit einer durchgezogenen Linie dargestellt, um sie besser von der Hydraulikleitung H unterscheiden zu können, welche der Druckmessung dient.

Die Zuführung Z ist einerseits mit der hydraulischen Kammer 10 strömungsverbunden und andererseits über eine Stelleinrichtung 22 mit einem zweiten Reservoir 23 für das Hydraulikmedium verbindbar. In dem zweiten Reservoir 23 liegt das Hydraulikmedium mit einem deutlich höheren Druck vor als im ersten Reservoir 16, beispielsweise mit dem zehnfachen Druck wie im ersten Reservoir 16. Der Druck im zweiten Reservoir 23 ist so bemessen, dass die hydraulische Kammer 10 auf einen Druck gebracht werden kann, der ausreichend ist, um die Kolbenstange 6 und den Kolben 3 in Richtung des Brennraums 4 - darstellungsgemäss nach oben- zu heben, um das Kompressionsverhältnis einzustellen.

Das zweite Reservoir 23 und die Stelleinrichtung 22 sind stationär bezüglich des Motorengehäuses 200 angeordnet.

Die Stelleinrichtung 22 dient dazu, den Druck in der Zuführung Z so einzustellen, dass das gewünschte Kompressionsverhältnis resultiert. Die Stelleinrichtung 22 ist beispielsweise als ein Proportionalventil ausgestaltet, welches mit dem Motorensteuerungssystem 100 signalverbunden ist, beispielsweise über eine dritte Signalleitung S3, sodass das Motorensteuerungssystem 100 die Stelleinrichtung 22 ansteuern kann. Sollen die Kolbenstange 6 und der Kolben 3 zum Vergrössern des Kompressionsverhältnisses angehoben werden, so steuert das Motorensteuerungssystem 100 die Stelleinrichtung 22, also beispielsweise das Proportionalventil, derart an, dass sich in der Zuführung Z und damit in der hydraulischen Kammer 10 ein solcher Druck einstellt, dass der Kolben 3 in die gewünschte Position angehoben wird.

In der Zuführung Z ist ferner ein zweites Rückschlagventil 25 vorgesehen, das zwischen dem Kniehebel 14 und der hydraulischen Kammer 10 angeordnet ist, also im nicht stationären Bereich der Zuführung Z. Vorzugsweise ist das zweite Rückschlagventil 25 am Kreuzkopf 7 fixiert. Das zweite Rückschlagventil 25 verhindert ein Rückströmen des Hydraulikmediums aus der hydraulischen Kammer 10 in die Zuführung Z.

Die Stelleinrichtung 22 ist so ausgestaltet, dass sie die Zuführung Z mit dem zweiten Reservoir 23 verbindet, in welchem der höhere Druck herrscht, oder die Strömungsverbindung zwischen der Zuführung Z und dem zweiten Reservoir 23 vollständig verschliesst, so wie es in Fig. 2 dargestellt ist. Dieser in Fig. 2 dargestellte Zustand bedeutet, dass die vorzugsweise als Proportionalventil ausgestaltete Stelleinrichtung 22 vollständig geschlossen ist.

Soll der Druck in der hydraulischen Kammer 10 zur Änderung des Kompressionsverhältnisses erhöht werden, so wird die Zuführung Z über die Stelleinrichtung 22 mit dem zweiten Reservoir 23 strömungsverbunden und der Druck über die Proportinalansteuerung auf den gewünschten Wert erhöht. Je nach Leckage oder Regelbedarf wird beispielsweise der offene Strömungsquerschnitt des Proportionalventils vergrössert oder verkleinert. Wird also viel Hydraulikmedium zur Befüllung der hydraulischen Kammer 10 benötigt, wird der Strömungsquerschnitt in der Stelleinrichtung 22 entsprechend erhöht, und dadurch kann in demjenigen Bereich des Arbeitszyklus, in dem sich der Kolben 3 im Bereich seines unteren Umkehrpunktes befindet, mehr Hydraulikmedium in die hydraulische Kammer 10 fliessen.

Parallel zu der Verbindung der Zuführung Z mit dem zweiten Reservoir 23 ist auch das erste Reservoir 16 über eine Backupleitung 172 und ein drittes Rückschlagventil 174 mit der Zuführung Z strömungsverbunden, wobei das dritte Rückschlagventil 174 so angeordnet und ausgestaltet ist, dass das Hydraulikmedium aus dem ersten Reservoir 16 in die Zuführung Z strömen kann, nicht aber in umgekehrter Richtung aus der Zuführung Z in das erste Reservoir 16. Ferner ist zwischen dem dritten Rückschlagventil 174 und dem ersten Reservoir 16 eine erste Drosseleinrichtung 173 in der Backupleitung 172 vorgesehen. Die Backupleitung 172 dient um sicherzustellen, dass auch dann, wenn die Stelleinrichtung 22 vollständig geschossen ist, die Zuführung Z also von dem zweiten Reservoir 23 entkoppelt ist, die Zuführung Z nicht leer laufen kann, was zu einem unerwünschten Trockenlauf führen könnte.

Für alle Betriebszustände, also beispielsweise auch diejenigen, in denen bei einem Betrieb mit konstantem Kompressionsverhältnis kein Anheben der Kolbenstange erfolgen soll, ist durch die Backupleitung 172 sichergestellt, dass die Zuführung Z zumindest mit dem ersten Reservoir 16 in Strömungsverbindung steht und sich nicht vollständig entleeren kann, beispielsweise durch Leckagen. Dabei verhindert das zweite Rückschlagventil 25 ein Rückströmen des Hydraulikmediums aus der hydraulischen Kammer 10 in die Zuführung Z.

Der Druckreduzierer 15 in der Hydraulikleitung H ist auf seiner Hochdruckseite mit der hydraulischen Kammer 10 strömungsverbunden. Dazu ist der Druckreduzierer 15 hochdruckseitig mit einer Auslassleitung 101 strömungsverbunden, welche zum Abführen des Hydraulikmediums aus der hydraulischen Kammer 10 dient.

Parallel zum Druckreduzierer 15 ist die Auslassleitung 101 mit einem Entlastungsventil 26 strömungsverbunden, welches zum Abführen von Hydraulikmedium aus der hydraulischen Kammer 10 dient. Das Entlastungsventil 26 ist hier als ansteuerbares Zweiwegeventil ausgestaltet, dessen Steueranschluss 27 über die hydraulischen Leitung H mit der Niederdruckseite des Druckreduzierers 15 strömungsverbunden ist. Das Entlastungsventil 26 wird somit hydraulisch angesteuert. An dem Steueranschluss 27 des Entlastungsventils 26 liegt also zumindest im Wesentlichen der gleiche Druck an, wie er auf der Niederdruckseite des Druckreduzierers 15 herrscht.

Ist das Entlastungsventil 26 in seiner in Fig. 2 dargestellten Offenstellung, so ist die Strömungsverbindung zwischen der Auslassleitung 101 und einem Ablauf 28 geöffnet, und das Hydraulikmedium kann aus der hydraulischen Kammer 10 durch die Auslassleitung 101 und das Entlastungsventil 26 zu dem Ablauf 28 fliessen, durch welchen das Hydraulikmedium in einen Behälter 29, beispielsweise einen Tank oder eine Wanne, abströmen kann,. Ist das Entlastungsventil 26 in seiner Schliessstellung, so verschliesst es die Strömungsverbindung zwischen der Auslassleitung 101 und dem Ablauf 28, sodass das Hydraulikmedium nicht aus der hydraulischen Kammer 10 in den Behälter 29 abströmen kann.

Die Auslassleitung 101, in welcher der gleiche Druck herrscht wie in der hydraulischen Kammer 10 ist somit über zwei parallel angeordnete Zweige zum Druckaustausch mit der Hydraulikleitung H verbunden, nämlich zum einen über den Druckreduzierer 15, dessen Hochdruckseite mit der Auslassleitung 101 verbunden ist, und dessen Niederdruckseite mit der Hydraulikleitung H verbunden ist, und zum anderen über das Entlastungsventil 26, dessen Steueranschluss 27 mit der Hydraulikleitung H verbunden ist.

Solange am Steueranschluss 27 also ein ausreichend hoher Druck anliegt, um das Entlastungsventil 26 in seiner Schliessstellung zu halten, kann kein Hydraulikmedium aus der hydraulischen Kammer 10 durch den Ablauf 28 abströmen. Zum Ablassen von Hydraulikmedium aus der hydraulischen Kammer 10 wird der Steueranschluss 27 )druckentlastet, sodass das Entlastungsventil 26 öffnet und das Hydraulikmedium über das Entlastungsventil 26 und den Ablauf 28 abströmen kann.

Bei dem zweiten Ausführungsbeispiel dient also die Hydraulikleitung H zusätzlich als eine Steuerleitung für das Entlastungsventil 26 zum Ablassen von Hydraulikmedium aus der hydraulischen Kammer 10.

Auch bei dem zweiten Ausführungsbeispiel ist die Hydraulikleitung H auf ihrer stationären Seite über die Nachfüllleitung 17 mit dem ersten Reservoir 16 verbunden, wobei die Nachfüllleitung 17 an einer Stelle in die Hydraulikleitung H mündet, die zwischen dem Fixpunkt 141 und dem Drucksensor 11 angeordnet ist. In der Nachfüllleitung 17 ist das erste Rückschlagventil 171 vorgesehen, das so angeordnet ist, dass das Hydraulikmedium aus dem ersten Reservoir 16 in die Hydraulikleitung H strömen kann, nicht aber aus der Hydraulikleitung H in das erste Reservoir 16.

Ferner ist die Hydraulikleitung H in ihrem stationären Bereich mit einer Entlastungsleitung 30 strömungsverbunden, in welcher ein ansteuerbares Schaltorgan 31 vorgesehen ist, welches hier als Absperrorgan ausgestaltet ist, das den Durchlass durch die Entlastungsleitung 30 wahlweise öffnet oder verschliesst. Das Schaltorgan 31 ist beispielsweise als ansteuerbares Absperrventil ausgestaltet, beispielsweise als Zweiwegeventil. Das Schaltorganorgan 31 ist mit dem Motorensteuerungssystem 100 signalverbunden, beispielsweise über eine vierte Signalleitung S4, sodass das Motorensteuerungssystem 100 das Schaltorgan 31 ansteuern kann.

Die Entlastungsleitung 30 mündet bei diesem Ausführungsbeispiel in einen weiteren Behälter 32, beispielsweise einen Tank oder eine Wanne, welcher der gleiche sein kann wie der Behälter 29.

Solange das Schaltorgan 31 den Durchlass durch die Entlastungsleitung 30 versperrt, herrscht in der Hydraulikleitung H der über den Druckreduzierer 15 reduzierte Druck, der proportional ist zum hydraulischen Druck in der hydraulischen Kammer 10, sodass mittels des Drucksensors 11 und der Auswerteeinheit 12 der Zylinderdruck, welcher im Brennraum 4 herrscht, ermittelbar ist. Ferner wird die Auslassleitung 101 mit dem Entlastungsventil 26geschlossen gehalten.

Soll, beispielsweise zum Verkleinern des Kompressionsverhältnisses, Hydraulikmedium aus der hydraulischen Kammer 10 abgelassen werden, so steuert das Motorensteuerungssystem 100 über die vierte Signalleitung S4 das Schaltorgan 31 so an, dass dieses den Durchlass durch die Entlastungsleitung 30 öffnet. Dadurch wird die Hydraulikleitung H druckentlastet, wodurch insbesondere auch der Druck am Steueranschluss 27 des Entlastungsventils 26 abfällt. Dadurch öffnet das Entlastungsventil 26, und das Hydraulikmedium kann aus der hydraulischen Kammer 10 über die Auslassleitung 101 und den Ablauf 28 abströmen.

Die zweite Drosseleinrichtung 175 in der Nachfüllleitung 17 verhindert dabei, dass in ausreichendem Masse Hydraulikmedium aus dem ersten Reservoir 16 nachströmen kann, sodass der Druck in der Hydraulikleitung H wie gewünscht abfällt und das Entlastungsventil 26 in die Offenstellung schaltet.

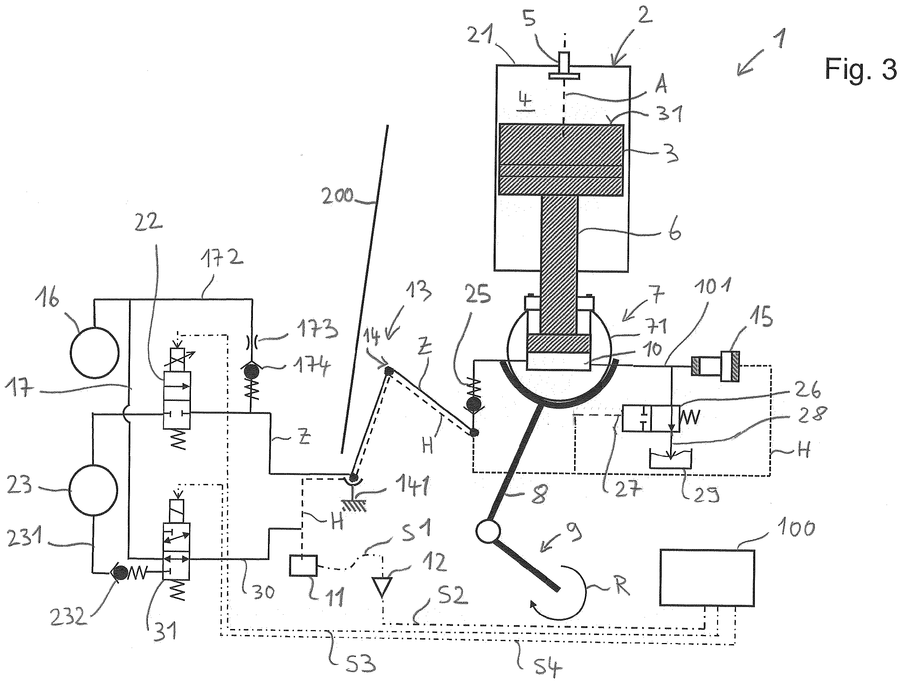

Fig. 3 veranschaulicht in einer schematischen Darstellung ein drittes Ausführungsbeispiels eines erfindungsgemässen Grossdieselmotors 1. Bei der folgenden Beschreibung des dritten Ausführungsbeispiels wird nur auf die Unterschiede zu dem ersten und zu dem zweiten Ausführungsbeispiel näher eingegangen. Ansonsten gelten die Erläuterungen des ersten und des zweiten Ausführungsbeispiels in gleicher Weise oder in sinngemäss gleicher Weise auch für das dritte Ausführungsbeispiel. Bei dem dritten Ausführungsbeispiel sind gleiche Teile oder von der Funktion her gleichwertige Teile mit den gleichen Bezugszeichen bezeichnet wie bei dem ersten und dem zweiten Ausführungsbeispiel.

Auch bei dem dritten Ausführungsbeispiel wird wie bei dem zweiten Ausführungsbeispiel die hydraulische Verbindung, die zur Entlastung der hydraulischen Kammer 10 dient, als Hydraulikleitung H für die Druckmessung genutzt, das heisst, der Kniehebel 14 der Druckübertragungsvorrichtung 13 wird auch für das Ansteuern der Druckentlastung der hydraulischen Kammer 10 genutzt.

Im Unterschied zum zweiten Ausführungsbeispiel ist jedoch beim dritten Ausführungsbeispiel die Hydraulikleitung H, die zusätzlich als Steuerleitung für das Entlastungsventil 26 dient, wahlweise mit dem ersten Reservoir 16 oder mit dem zweiten Reservoir 23 verbindbar. Dazu ist das Schaltorgan 31 beim dritten Ausführungsbeispiel als ein Umschaltventil ausgestaltet, beispielsweise als ein 3/2 Wegeventil, das an seinem Ausgang mit der Entlastungsleitung 30 verbunden ist, welche mit der Hydraulikleitung H strömungsverbunden ist. Von den beiden Eingängen des Schaltorgans 31 ist der eine über die Nachfüllleitung 17 mit dem ersten Reservoir 16 strömungsverbunden, in welchem der niedrigere Druck herrscht, und der andere Eingang ist über eine Versorgungsleitung 231 mit dem zweiten Reservoir 23 strömungsverbunden, in welchem der höhere Druck herrscht. In der Versorgungsleitung 231 ist ferner ein viertes Rückschlagventil 232 vorgesehen, welches so angeordnet und ausgestaltet ist, dass es ein Strömen des Hydraulikmediums aus dem zweiten Reservoir 23 in das Schaltorgan 31 zulässt, aber ein Rückströmen des Hydraulikmediums durch die Versorgungsleitung 231 in das zweite Reservoir 23 verhindert.

Ist das Schaltorgan 31 in der in Fig. 3 dargestellten Schaltstellung, so ist die Hydraulikleitung H über die Entlastungsleitung 30 und die Nachfüllleitung 17 mit dem ersten Reservoir 16 strömungsverbunden. Ist das Schaltorgan 31 in seiner anderen Schaltstellung, so ist die Hydraulikleitung H über die Entlastungsleitung 30 und die Versorgungsleitung 231 mit dem zweiten Reservoir 23 strömungsverbunden.

Die in Fig. 3 dargestellte Schaltstellung des Schaltorgans 31 wird vorzugsweise nur dann verwendet, wenn das VCR System deaktiviert ist. Ist nämlich die Hydraulikleitung H mit dem ersten Reservoir 16 strömungsverbunden, so liegt auch an dem Steueranschluss 27 des Entlastungsventils 26 nur der niedrigere Druck an, der in dem ersten Reservoir 16 herrscht. Je nachdem, wie gross der niedrigere Druck im ersten Reservoir 16 gewählt wird, ist es möglich, dass der niedrigere Druck des ersten Reservoirs 16 nicht ausreicht, um das Entlastungsventil 26 in der Schliessstellung zu halten. Daher wird die in Fig. 3 dargestellte Schaltstellung des Schaltorgans 31 vorzugsweise nur dann gewählt, wenn das VCR System deaktiviert ist.

Wenn das VCR System aktiv ist bzw. aktiviert wird, so wird das Schaltorgan 31 in diejenige Schaltstellung gebracht, in welcher die Hydraulikleitung H über die Entlastungsleitung 30 und die Versorgungsleitung 231 mit dem zweiten Reservoir 23 strömungsverbunden ist, in welchem der höhere Druck herrscht. Da nun der höhere Druck an dem Steueranschluss 27 des Entlastungsventils 26 anliegt, wird dieses zuverlässig in seine Schliessstellung gebracht und dort gehalten. Da das vierte Rückschlagventil 231 ein Rückströmen des Hydraulikmediums auch dann verhindert, wenn der Druck in der Hydraulikleitung H grösser wird als der Druck im zweiten Reservoir 23, kann nun über die Hydraulikleitung H mit Hilfe des Drucksensors 11 und der Auswerteeinheit 12 der Zylinderdruck ermittelt werden.

Bei dem dritten Ausführungsbeispiels ist es nicht notwendig, aber möglich, in der Nachfüllleitung 17 das Rückschlagventil 171 vorzusehen.

Das dritte Ausführungsbeispiel hat insbesondere den Vorteil, dass auch bei deaktivierten VCR System, der Kniehebel 14 bzw. die Hydraulikleitung H mit Hydraulikmedium gefüllt bleibt und nicht leer laufen kann, weil die Hydraulikleitung H auch bei deaktivierten VCR System mit dem ersten Reservoir 16 strömungsverbunden ist.

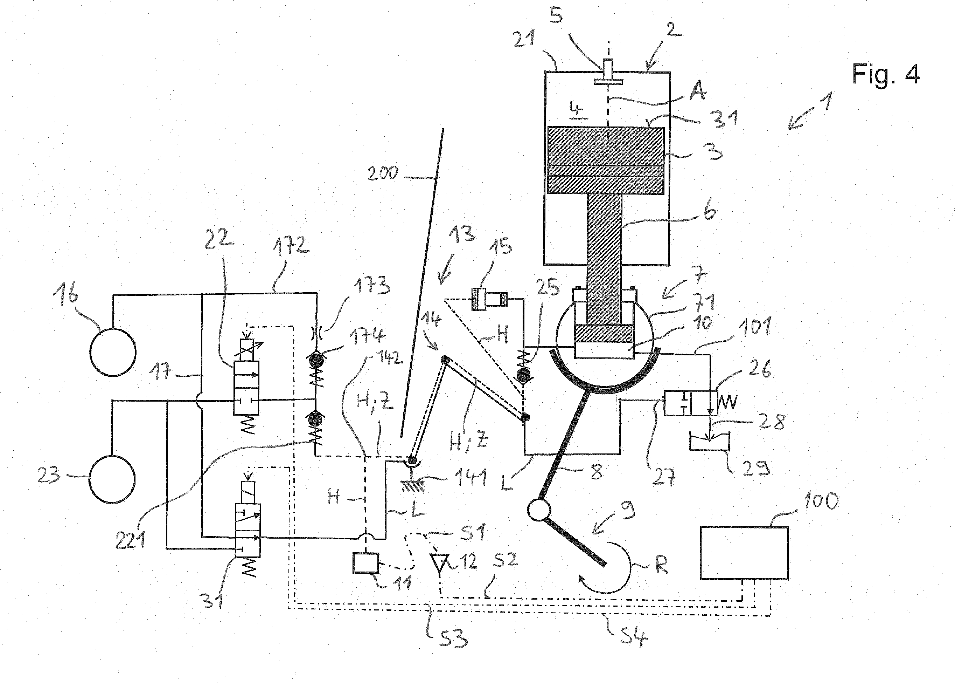

Fig. 4 veranschaulicht in einer schematischen Darstellung ein viertes Ausführungsbeispiels eines erfindungsgemässen Grossdieselmotors 1. Bei der folgenden Beschreibung des vierten Ausführungsbeispiels wird nur auf die Unterschiede zu dem ersten, zweiten und zu dritten Ausführungsbeispiel näher eingegangen. Ansonsten gelten die Erläuterungen des ersten, des zweiten und des dritten Ausführungsbeispiels in gleicher Weise oder in sinngemäss gleicher Weise auch für das vierte Ausführungsbeispiel. Bei dem vierten Ausführungsbeispiel sind gleiche Teile oder von der Funktion her gleichwertige Teile mit den gleichen Bezugszeichen bezeichnet wie bei dem ersten, dem zweiten und dem dritten Ausführungsbeispiel.

Bei dem vierten Ausführungsbeispiel erfolgt die Druckmessung über die Zuführung Z, mit welcher der hydraulische Kammer 10 das Hydraulikmedium zuführbar ist. Das heisst, bei dem vierten Ausführungsbeispiel wird die Zuführung Z als Hydraulikleitung H für die Druckmessung verwendet. Da die Hydraulikleitung H für die Druckmessung strichliert dargestellt ist, ist bei dem vierten Ausführungsbeispiel in Fig. 4 auch die Zuführung Z strichliert dargestellt.

Die Steuerleitung für das Ansteuern des Entlastungsventils 26 ist in Fig. 4 mit einer durchgezogenen Linie dargestellt und mit dem Bezugszeichen L bezeichnet.

Da bei dem vierten Ausführungsbeispiel die Zuführung Z als Hydraulikleitung H für die Druckmessung verwendet wird, ist der Druckreduzierer 15 niederdruckseitig mit der Zuführung Z strömungsverbunden. Der Druckreduzierer 15 ist niederdruckseitig an einer Stelle mit der Zuführung Z verbunden, die in Strömungsrichtung gesehen zwischen dem Kniehebel 14 und dem zweiten Rückschlagventil 25 angeordnet ist. Hochdruckseitig ist der Druckreduzierer 15 mit der hydraulischen Kammer 10 strömungsverbunden, sodass die Hochdruckseite des Druckreduzierers 15 mit dem in der hydraulischen Kammer 10 herrschenden Druck beaufschlagt wird. Der Druckreduzierer 15 ist parallel zum zweiten Rückschlagventil 25 angeordnet.

Im nicht stationären Bereich der Zuführung Z wird die Zuführung Z als Hydraulikleitung H für die Druckmessung genutzt. Im stationären Bereich der Zuführung Z ist eine Verzweigung 142 vorgesehen, an welcher die Hydraulikleitung H von der Zuführung Z abzweigt und sich zum Drucksensor 11 erstreckt. Von dieser Verzweigung 142 erstreckt sich die Zuführung Z zu der Steuereinrichtung 22. Wie bereits im Zusammenhang mit dem zweiten Ausführungsbeispiel beschrieben, ist die Stelleinrichtung 22 so ausgestaltet, dass sie die Zuführung Z wahlweise entweder mit dem zweiten Reservoir 23 verbindet, in welchem der höhere Druck herrscht, oder die Strömungsverbindung zwischen der Zuführung Z und dem zweiten Reservoir 23 vollständig verschliesst, so wie es auch in Fig. 4 dargestellt ist. Dieser in Fig. 4 dargestellte Zustand bedeutet, dass die vorzugsweise als Proportionalventil ausgestaltete Stelleinrichtung 22 vollständig geschlossen ist.

Um die Druckmessung über die Hydraulikleitung H zu ermöglichen, ist in der Strömungsverbindung zwischen der Verzweigung 142 und der Stelleinrichtung 22 ein fünftes Rückschlagventil 221 vorgesehen, welches so angeordnet und ausgestaltet ist, dass es ein Strömen des Hydraulikmediums von der Stelleinrichtung 22 zu der Verzweigung 142 zulässt, aber ein Rückströmen des Hydraulikmediums von der Verzweigung 142 in Richtung der Stelleinrichtung 22 verhindert.

In sinngemäss gleicher Weise wie anhand des dritten Ausführungsbeispiels beschrieben, kann die Steuerleitung L für das Ansteuern des Entlastungsventils 26 mittels des Schaltorgans 31 wahlweise mit dem ersten Reservoir 16 (niedrigerer Druck) oder mit dem zweiten Reservoir 23 (höherer Druck) strömungsverbunden werden.

Das Befüllen bzw. das Nachfüllen der hydraulischen Kammer 10 mit Hydraulikmedium erfolgt auch hier, wenn sich der Kolben 3 im Bereich seines unteren Umkehrpunkts befindet, weil hier über den Arbeitszyklus gesehen, der Druck in der hydraulischen Kammer 10 am geringsten ist. Das fünfte Rückschlagventil 221 und das zweite Rückschlagventil 25 öffnen, sodass das Hydraulikmedium in an sich bekannter Weise in die hydraulische Kammer 10 strömt, beispielsweise zur Kompensation von Leckageverlusten. Der Druckreduzierer 15 wird durch das Hydraulikmedium in seine Ausgangsstellung gebracht, beispielsweise durch Verschieben eines Druckkolbens des Druckreduzierers 15. Wenn die Kompression im Zylinder 2 im Laufe des Kompressionshubs des Kolbens 3 beginnt, steigt der Druck in der hydraulischen Kammer 10 an, wodurch das zweite Rückschlagventil 25 schliesst. Sobald das Strömen des Hydraulikmediums in die hydraulische Kammer 10 aufhört, schliesst auch das fünfte Rückschlagventil 221. Der Druckreduzierer 15 erhöht den Druck in der Hydraulikleitung H proportional zum hydraulischen Druck, der in der hydraulischen Kammer 10 herrscht, und damit proportional zum Zylinderdruck. Der in der Hydraulikleitung H herrschende Druck wird auf der stationären Seite der Hydraulikleitung H vom Drucksensor 11 erfasst und an die Auswerteeinheit 12 zur Ermittlung des Zylinderdrucks im Brennraum 4 des Zylinders 2 weitergeleitet.

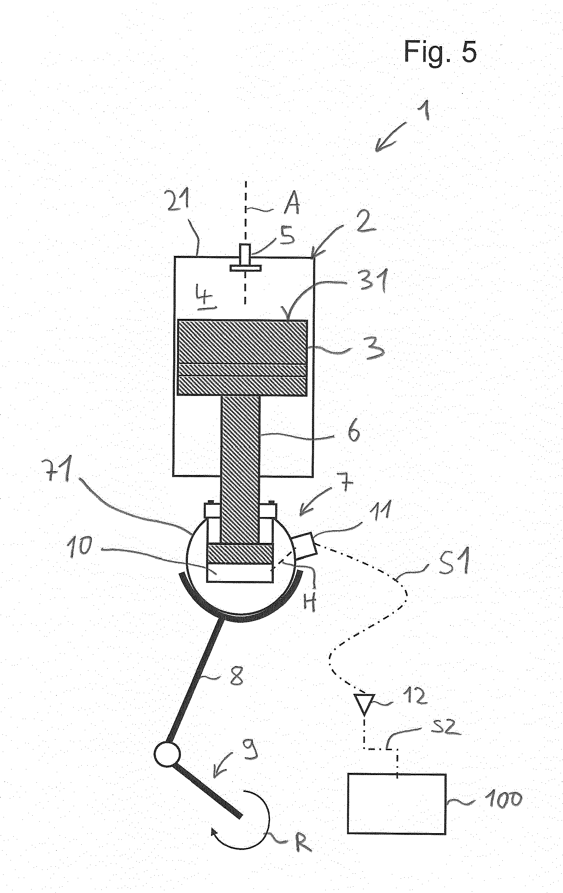

Fig. 5 veranschaulicht in einer schematischen Darstellung ein fünftes Ausführungsbeispiels eines erfindungsgemässen Grossdieselmotors 1. Bei der folgenden Beschreibung des fünften Ausführungsbeispiels wird nur auf die Unterschiede zu den vorangehend beschriebenen Ausführungsbeispielen näher eingegangen. Ansonsten gelten die Erläuterungen der vorangehend beschriebenen Ausführungsbeispielen in gleicher Weise oder in sinngemäss gleicher Weise auch für das fünfte Ausführungsbeispiel. Bei dem fünften Ausführungsbeispiel sind gleiche Teile oder von der Funktion her gleichwertige Teile mit den gleichen Bezugszeichen bezeichnet wie bei den vorangehend beschriebenen Ausführungsbeispiele.

Bei dem fünften Ausführungsbeispiel ist der Drucksensor 11 am Kreuzkopf 7 angeordnet, derart, dass sich der Drucksensor 11 gemeinsam mit dem Kreuzkopf 7 bewegt. Der Drucksensor 11 ist also bei dem fünften Ausführungsbeispiel nicht stationär, sondern bewegt sich relativ zum Motorengehäuse. Die vom Drucksensor 11 ermittelten Messwerte werden dann an die typischerweise - aber nicht notwendigerweise- stationäre Auswerteeinheit 12 übertragen. Diese Übertragung vom Drucksensor 11 zur Auswerteeinheit 12 kann beispielsweise über eine drahtlose Signalverbindung erfolgen, z.B. mit einem Sender am Drucksensor 11 und einem Empfänger an der Auswerteeinheit 12. Auch ist es möglich, die Übertragung mittels der ersten Signalleitung S1 durchzuführen, welche als ein flexibles Kabel ausgestaltet ist und die Auswerteeinheit 12 mit dem relativ zu ihr bewegbaren Drucksensor 11 verbindet. Ein solches Kabel kann beispielsweise an oder in einem Kniehebel angeordnet werden. Dies kann insbesondere auch einer der Kniehebel in dem Grossdieselmotor 1 sein, die zwischen dem stationären Motorengehäuse 200 und dem sich im Betriebszustand bewegenden Kreuzkopf 7 angeordnet sind, beispielsweise, um Schmier- oder Kühlmedien in den Kreuzkopf 7 oder in die Kolbenstange 6 einzubringen. Auch kann für die Führung der ersten Signalleitung S1 derjenige Kniehebel verwendet werden, mit welchem der hydraulischen Kammer 10 das Hydraulikmedium zum Verschieben der Kolbenstange 6 zugeführt wird. Natürlich kann auch bei dem fünften Ausführungsbeispiel ein Druckreduzierer 15 in der Hydraulikleitung H zwischen der hydraulischen Kammer 10 und dem Drucksensor 11 vorgesehen sein.

## Patentansprüche

1. Grossdieselmotor mit mindestens einem Zylinder (2), welcher einen Brennraum (4) aufweist, der durch einen Kolben (3) begrenzt wird, welcher entlang einer Zylinderachse (A) hin- und herbewegbar angeordnet ist, sowie mit einer rotierbaren Kurbelwelle (9), wobei der Kolben (3) über eine Kolbenstange (6) mit einem Kreuzkopf (7) verbunden ist, der einen Kreuzkopfzapfen (71) aufweist, wobei der Kreuzkopf (7) über eine Schubstange (8) mit der Kurbelwelle (9) verbunden ist, und wobei im Kreuzkopfzapfen (71) eine hydraulische Kammer (10) vorgesehen ist, welche durch die Kolbenstange (6) begrenzt wird, und mittels welcher die Kolbenstange (6) zum Einstellen eines Kompressionsverhältnisses relativ zum Kreuzkopfzapfen (71) in Richtung der Zylinderachse (A) verschiebbar ist, **dadurch gekennzeichnet, dass** ein Drucksensor (11) vorgesehen ist, mit welchem ein hydraulischer Druck bestimmbar ist, der in der hydraulischen Kammer (10) herrscht, sowie eine Auswerteeinheit (12), mit welcher ein im Brennraum (4) herrschender Zylinderdruck mittels des hydraulischen Drucks bestimmbar ist.

2. Grossdieselmotor nach Anspruch 1, wobei der Drucksensor (11) am Kreuzkopf (7) angeordnet ist, derart, dass sich der Drucksensor (11) gemeinsam mit dem Kreuzkopf (7) bewegt.

3. Grossdieselmotor nach Anspruch 1, wobei der Drucksensor (11) an einer Messstelle vorgesehen ist, welche stationär bezüglich eines Motorengehäuses (200) angeordnet ist.

4. Grossdieselmotor nach Anspruch 3, wobei eine hydraulische Druckübertragungsvorrichtung (13) vorgesehen ist, mit welcher der in der hydraulischen Kammer (10) herrschende hydraulische Druck an den Drucksensor (11) übertragbar ist.

5. Grossdieselmotor nach Anspruch 4, wobei die hydraulische Druckübertragungsvorrichtung (13) einen Kniehebel (14) umfasst, welcher einerseits mit dem Kreuzkopf (7) verbunden ist, und andererseits mit dem Motorengehäuse (200).

6. Grossdieselmotor nach Anspruch 5, wobei der Kniehebel (14) eine Zuführung (Z) umfasst, mit welcher der hydraulischen Kammer (10) ein Hydraulikmedium zuführbar ist.

7. Grossdieselmotor nach Anspruch 5 oder 6, wobei der Kniehebel (14) eine Steuerleitung (H) für ein Entlastungsventil (26) zum Ablassen des Hydraulikmediums aus der hydraulischen Kammer (10) umfasst

8. Grossdieselmotor nach einem der Ansprüche 4-7, wobei die hydraulische Druckübertragungsvorrichtung (14) einen Druckreduzierer (15) umfasst, der mit dem in der hydraulischen Kammer (10) herrschenden hydraulischen Druck beaufschlagbar ist, und diesen Druck reduziert.

9. Grossdieselmotor nach Anspruch 8, wobei der Druckreduzierer (15) am Kreuzkopf (7) angeordnet ist.

10. Grossdieselmotor nach einem der Ansprüche 8-9, wobei der Druckreduzierer (15) eine Hochdruckseite und eine Niederdruckseite umfasst, wobei die Hochdruckseite in Strömungsverbindung mit der hydraulischen Kammer (10) steht, und wobei der Drucksensor (11) mit dem auf der Niederdruckseite herrschenden Druck beaufschlagbar ist.

11. Grossdieselmotor nach einem der Ansprüche 8-10 wobei der Druckreduzierer (15) mit einer Auslassleitung (101) zum Abführen des Hydraulikmediums aus der hydraulischen Kammer (10) strömungsverbunden ist.

12. Grossdieselmotor nach einem der Ansprüche 10-11, wobei der Niederdruckseite des Druckreduzierers (15) Hydraulikmedium zuführbar ist.

13. Grossdieselmotor nach einem der vorangehenden Ansprüche, ausgestaltet als längsgespülterZweitakt-Grossdieselmotor.

14. Grossdieselmotor nach Anspruch 13, ausgestaltet als Dual-Fuel Grossdieselmotor, der in einem Flüssigmodus betreibbar ist, in welchem ein flüssiger Brennstoff zur Verbrennung in den Brennraum (4) eingebracht wird, und der ferner in einem Gasmodus betreibbar ist, in welchem ein Gas zur Verbrennung in den Brennraum (4) eingebracht wird.

15. Verfahren zum Bestimmen des Zylinderdrucks in einem Grossdieselmotor mit mindestens einem Zylinder (2), welcher einen Brennraum (4) aufweist, der durch einen Kolben (3) begrenzt wird, welcher entlang einer Zylinderachse (A) hin- und herbewegbar angeordnet ist, sowie mit einer rotierbaren Kurbelwelle (9), wobei der Kolben (3) über eine Kolbenstange (6) mit einem Kreuzkopf (7) verbunden ist, der einen Kreuzkopfzapfen (71) aufweist, wobei der Kreuzkopf (7) über eine Schubstange (8) mit der Kurbelwelle (9) verbunden ist, und wobei im Kreuzkopfzapfen (71) eine hydraulische Kammer (10) vorgesehen ist, welche durch die Kolbenstange (6) begrenzt wird, und mittels welcher die Kolbenstange (6) zum Einstellen eines Kompressionsverhältnisses relativ zum Kreuzkopfzapfen (71) in Richtung der Zylinderachse (A) verschiebbar ist, **dadurch gekennzeichnet, dass** mittels eines Drucksensor (11) ein hydraulischer Druck in der hydraulischen Kammer bestimmt wird, und mittels einer Auswerteeinheit (12) der im Brennraum (4) herrschender Zylinderdruck mittels des hydraulischen Drucks bestimmt wird.
